# EUROPÄISCHE PATENTSCHRIFT

(11) **EP 3 496 994 B1**
(45) Veröffentlichungstag und Bekanntmachung des Hinweises auf die Patenterteilung: **22.07.2020**
(21) Anmeldenummer: 17752058.2
(22) Anmeldetag: 03.08.2017
(51) Int. Cl.: B62D 1/19

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 09.08.2016 DE 102016214709
(43) Veröffentlichungstag der Anmeldung: 19.06.2019
(73) Patentinhaber: thyssenkrupp Presta AG, 9492 Eschen (LI); thyssenkrupp AG, 45143 Essen (DE)
(72) Erfinder: GANAHL, Johannes, 6780 Schruns (AT); FLEISCHER, Martin, 9436 Balgach (CH); GEIGER, Adrian, 9436 Balgach (CH); PALTINISANU, Ciprian, 9492 Eschen (LI)
(74) Vertreter: thyssenkrupp Intellectual Property GmbH
(86) Internationale Anmeldenummer: PCT/EP2017/069663
(87) Internationale Veröffentlichungsnummer: WO 2018/029076

(56) Entgegenhaltungen:
- EP-A1- 2 259 957
- EP-A1- 3 028 926
- US-A1- 2015 375 773

## Beschreibung

### Stand der Technik

Die Erfindung betrifft eine Lenksäule für ein Kraftfahrzeug, umfassend ein inneres Mantelrohr, in dem eine Lenkspindel um ihre Längsachse drehbar gelagert ist, eine äußere Manteleinheit, in der das innere Mantelrohr gehaltert ist, und die mit der Karosserie eines Kraftfahrzeugs direkt oder indirekt verbindbar ist, eine Spanneinrichtung, die in Fixierstellung die äußere Manteleinheit relativ zu dem inneren Mantelrohr festlegt und die in Freigabestellung eine Verstellung des inneren Mantelrohrs relativ zur äußeren Manteleinheit zumindest in Längsrichtung freigibt, wobei die Spanneinrichtung mindestens ein Arretierteil aufweist, welches sich in Längsrichtung an der äußeren Manteleinheit abstützt und in Fixierstellung in Längsrichtung unverschiebbar mit einem Eingriffsteil verbunden ist, welches mit dem inneren Mantelrohr verbunden ist, und in Freigabestellung von dem Eingriffsteil gelöst ist und eine relative Bewegung des inneren Mantelrohrs zur äußeren Manteleinheit in Längsrichtung freigibt, wobei das innere Mantelrohr und die äußere Manteleinheit über eine Energieabsorptionseinrichtung gekoppelt sind, die zumindest zwei Energieabsorptionselemente und eine Koppelvorrichtung aufweist, wobei über die Koppelvorrichtung zumindest eines der Energieabsorptionselemente zwischen dem inneren Mantelrohr und der äußeren Manteleinheit einkoppelbar oder auskoppelbar ist, welches in eingekoppeltem Zustand in Fixierstellung der Spanneinrichtung bei einer relativen Verschiebung in Längsrichtung von innerem Mantelrohr und äußerer Manteleinheit plastisch verformbar ist.

Zur Anpassung der Lenkradposition an die Sitzposition des Fahrers eines Kraftfahrzeugs sind derartige Lenksäulen in unterschiedlichen Ausführungsformen im Stand der Technik bekannt. Das am hinteren Ende der Lenkspindel angebrachte Lenkrad kann bei gattungsgemäßen Lenksäulen durch eine Längenverstellung in Richtung der Lenksäulen-Längsachse in Längsrichtung im Fahrzeuginnenraum positioniert werden.

Die Längenverstellbarkeit wird dadurch realisiert, dass die Stelleinheit, bestehend aus einer äußeren Manteleinheit, kurz als Manteleinheit bezeichnet, und einem inneren Mantelrohr, kurz Mantelrohr genannt, in dem die Lenkspindel drehbar gelagert ist, in Richtung der Längsachse, d.h. in Längsrichtung teleskopartig verstellbar ist und mittels einer lösbaren Spanneinrichtung in unterschiedlichen Längspositionen feststellbar, d.h. lösbar fixierbar ist. Die Spanneinrichtung, auch als Feststelleinrichtung bezeichnet, wirkt auf die an der Karosserie gehaltene äußere Manteleinheit, wobei in geöffnetem Zustand der Spanneinrichtung - auch gleichbedeutend als Freigabestellung oder Löseposition bezeichnet - eine Verschiebung des inneren Mantelrohrs in der äußeren Manteleinheit zur Einstellung der Lenkradposition möglich ist und in geschlossenem Zustand - Fixierstellung oder Feststellposition - das innere Mantelrohr in der äußeren Manteleinheit verspannt ist und im normalen Fahrbetrieb die Lenkradposition unter den zu erwartenden mechanischen Beanspruchungen fixiert ist.

Als wirksame Maßnahme zur Verbesserung der Insassensicherheit bei einem Fahrzeugzusammenstoß, dem sogenannten Crashfall, bei dem der Fahrer mit hoher Geschwindigkeit auf das Lenkrad aufprallt, ist es bekannt, die Lenksäule auch in Fixierstellung der Spanneinrichtung in Längsrichtung zusammenschiebbar zu gestalten, wenn eine Kraft auf das Lenkrad ausgeübt wird, die einen nur im Crashfall auftretenden Grenzwert überschreitet. Um für eine kontrollierte Abbremsung eines auf das Lenkrad auftreffenden Körpers zu sorgen, ist zwischen der Manteleinheit und dem Mantelrohr, die im Normalbetrieb durch die Spanneinrichtung miteinander fixiert sind, im Crashfall jedoch relativ zueinander zusammengeschoben werden, eine Energieabsorptionseinrichtung eingekoppelt. Diese setzt die eingeleitete kinetische Energie in plastische Verformung eines Energieabsorptionselements um, beispielsweise durch Aufreißen einer Reißlasche oder Verbiegen eines langgestreckten Biegeelements, etwa eines Biegedrahts oder Biegestreifens.

Eine gattungsgemäße Lenksäule ist in der DE 10 2008 034 807 B3 beschrieben. Die darin beschriebene Spanneinrichtung umfasst ein an der äußeren Manteleinheit in Längsrichtung abgestütztes Arretierteil, welches quer zur Längsrichtung mit einem korrespondierendem Eingriffsteil an dem inneren Mantelrohr in Fixierstellung kraft- und formschlüssig in Eingriff gebracht werden kann. In Freigabestellung wird das Arretierteil vom Eingriffsteil abgehoben und dadurch gelöst, so dass das innere Mantelrohr zur Verstellung der Lenkradposition in Längsrichtung relativ zur Manteleinheit verschiebbar ist.

Das Eingriffsteil ist über eine Energieabsorptionseinrichtung mit dem inneren Mantelrohr verbunden, die im Normalbetrieb nicht beansprucht wird und eine starre Verbindung zwischen äußerer Manteleinheit und innerem Mantelrohr bildet. Im Crashfall jedoch wird über das Arretierteil eine so große Kraft in das Eingriffsteil eingeleitet, dass die durch die Spanneinrichtung aufgebrachte Haltekraft überwunden wird und sich die äußere Manteleinheit und das innere Mantelrohr in Längsrichtung gegeneinander bewegen, wobei das Energieabsorptionselement verformt und dadurch die Bewegung abgebremst wird.

In der genannten DE 10 2008 034 807 B3 wird weiterhin vorgeschlagen, die Bremswirkung der Energieabsorptionseinrichtung steuerbar zu gestalten, um im Crashfall zu berücksichtigen, ob der Fahrer angegurtet ist oder nicht, oder eine Anpassung an Parameter wie Fahrergewicht, Abstand vom Lenkrad und dergleichen vornehmen zu können. Im Einzelnen sollen hierzu mindestens zwei Energieabsorptionselemente vorgesehen werden, die bei Bedarf dadurch aktiviert werden können, dass sie zwischen der äußeren Manteleinheit und dem inneren Mantelrohr eingekoppelt werden, indem sie durch die Koppelvorrichtung in mechanische Wirkverbindung zwischen dem Eingriffsteil und dem inneren Mantelrohr gebracht werden. Zur Kopplung mit dem Energieabsorptionselement weist das Eingriffsteil zumindest ein erstes Mitnehmerelement auf, welches mit dem ersten Energieabsorptionselement in Wirkeingriff bringbar ist. Durch die Ausgestaltung der Koppelvorrichtung kann zumindest eines der Energieabsorptionselemente zwischen dem inneren Mantelrohr und dem Eingriffsteil eingekoppelt werden, oder zumindest eines der Energieabsorptionselemente kann ausgekoppelt werden. Auf diese Weise kann eine schaltbare, individuell an den jeweiligen Bedarfsfall angepasste Bremscharakteristik, d.h. ein Crashniveau bzw. Crashlevel realisiert werden.

Eine weitere Ausführung einer schaltbaren Energieabsorptionsvorrichtung für eine Lenksäule ist in der US 2015/0375773 A1, die den Oberbegriff des unabhängigen Anspruchs zeigt, beschrieben. Diese weist ebenfalls zwei Energieabsorptionselemente aus, von denen eines zur Verringerung des Crashniveaus durch die Koppelvorrichtung aus dem Kraftfluss zwischen Manteleinheit und innerem Mantelrohr ausgekoppelt werden kann. In dieser Anordnung greifen das Mitnehmerelement der Koppelvorrichtung und das Arretierelement unmittelbar an dem Energieabsorptionselement an, was sich nachteilig auf die Funktion auswirken kann.

Nachteilig an der gattungsgemäß aus der DE 10 2008 034 807 B3 vorbekannten Energieabsorptionseinrichtung ist, dass durch die Anordnung der Energieabsorptionselemente ein relativ großer Bauraum beansprucht wird. Die zuverlässig schaltbare Ausgestaltung der Koppelvorrichtung ist relativ aufwendig.

Angesichts der vorangehend erläuterten Problematik ist es eine Aufgabe der vorliegenden Erfindung, eine Lenksäule mit einer verbesserten schaltbaren Energieabsorptionseinrichtung zur Verfügung zu stellen, welche eine hohe Funktionssicherheit bei einem flexibel anpassbarem Bauraum ermöglicht.

### Darstellung der Erfindung

Diese Aufgabe wird durch eine Lenksäule für ein Kraftfahrzeug mit den Merkmalen des Anspruchs 1 gelöst. Vorteilhafte Weiterbildungen ergeben sich aus den Unteransprüchen.

Erfindungsgemäß wird vorgeschlagen, dass das Eingriffsteil mindestens ein Verbindungsteil aufweist, das ein zweites Mitnehmerelement aufweist, welches mit dem zweiten Energieabsorptionselement in Wirkeingriff bringbar ist, wobei das Eingriffsteil und das Verbindungsteil über die Koppelvorrichtung in Längsrichtung voneinander trennbar verbunden sind.

Das Eingriffsteil ist separat von den Energieabsorptionselementen ausgebildet. Im Crashfall sorgt es einerseits über die Verbindung mit dem Arretierteil und andererseits über die Verbindung mit den Energieabsorptionselementen für die Kraftübertragung von der Manteleinheit auf die Energieabsorptionseinrichtung. Erfindungsgemäß zeichnet es sich dadurch aus, dass es quer zur Längsrichtung teilbar ausgestaltet ist, so dass es in mindestens zwei Teilelemente getrennt werden kann, die in Längsrichtung entkoppelt und unabhängig voneinander bewegbar sind. Dies wird dadurch realisiert, dass das mindestens eine Verbindungsteil durch Entkoppeln der Koppelvorrichtung von dem Eingriffsteil gelöst, d.h. in Längsrichtung abgekoppelt werden kann.

Das Eingriffsteil ist in Fixierstellung bezüglich der Längsrichtung unverschiebbar mit dem Arretierelement verbunden, beispielsweise über korrespondierende, ineinander eingreifende Formschlusselemente, wie eine Verzahnung oder dergleichen. Das Verbindungsteil bildet ein Teilelement, welches wahlweise durch die gekoppelte Koppelvorrichtung mit dem Eingriffsteil verbunden ist, wodurch der verbundene bzw. gekoppelte Zustand realisiert wird, oder im getrennten bzw. entkoppelten Zustand durch die dann entkoppelte Koppelvorrichtung von dem Eingriffsteil gelöst ist. Im gekoppelten Zustand wird das mindestens eine Verbindungsteil im Crashfall mit diesem zusammen in Längsrichtung relativ zum inneren Mantelrohr bewegt. Im getrennten, entkoppelten Zustand hat das Verbindungsteil mit dem Eingriffsteil keine mechanische Verbindung über die Koppelvorrichtung, so dass im Crashfall nur das Eingriffsteil relativ zum inneren Mantelrohr bewegt wird, aber das Verbindungsteil relativ zum inneren Mantelrohr ruht.

Dadurch, dass das Eingriffsteil über ein erstes Mitnehmerelement mit einem ersten Energieabsorptionselement wirkverbunden ist, und das Verbindungsteil ein zweites Mitnehmerelement aufweist, welches mit einem zweiten Energieabsorptionselement wirkverbunden ist, werden im verbundenen Zustand, in dem das Verbindungsteil durch die Koppelvorrichtung mit dem Eingriffsteil verbunden ist und im Crashfall gemeinsam mit diesem relativ zum inneren Mantelrohr bewegt wird, im Crashfall das erste und das zweite Energieabsorptionselement verformt. Dadurch wird ein hohes Crashniveau mit hoher Energieabsorption realisiert. Im getrennten Zustand wird im Crashfall nur das Eingriffsteil relativ zum inneren Mantelrohr bewegt, so dass nur das mit dem Eingriffsteil verbundene erste Energieabsorptionselement verformt wird und ein niedrigeres Crashniveau mit geringerer Energieabsorption realisiert wird. Im getrennten Zustand bleibt das mit dem gelösten, vom Eingriffsteil getrennten Verbindungsteil verbundene zweite Energieabsorptionselement unverformt, es wird deaktiviert und absorbiert keine Energie.

Die Aktivierung der Koppelvorrichtung ermöglicht bei der Erfindung im Bedarfsfall eine kontrollierte Teilung des Eingriffsteils, wobei mindestens ein Verbindungsteil von dem Eingriffsteil gelöst wird und dadurch wie vorangehend beschrieben das Crashniveau veränderbar ist.

Die erfindungsgemäße Umschaltung der Energieabsorptionsvorrichtung hat den Vorteil, dass die Koppelvorrichtung nicht wie im Stand der Technik unmittelbar mit einem der Energieabsorptionselemente zusammenwirkt, sondern das Eingriffsteil über das erste Mitnehmerelement und das Verbindungsteil über das zweite Mitnehmerelement unabhängig vom Zustand der Koppeleinrichtung mit den jeweiligen Energieabsorptionselementen verbunden bleiben können. Die Trennung des Verbindungsteils von dem Eingriffselement greift nicht in die Verbindung der Mitnehmerelemente mit den Energieabsorptionselementen ein. Dadurch ist die Funktion der Verbindung zwischen den Energieabsorptionselementen und dem Eingriffsteil unabhängig von der Funktion der Einkopplung oder Auskopplung einzelner Energieabsorptionselemente. Dadurch, dass bei der Erfindung die Funktionalität der mechanischen Trennung aus dem Kraftfluss im Crashfall unabhängig von der Verbindung der Energieabsorptionselemente mit dem Eingriffsteil realisiert wird, können die Energieabsorptionselemente mit größerer Gestaltungsfreiheit im Hinblick auf das Energieabsorptionsverhalten optimiert werden.

Die erfindungsgemäße lösbare Verbindung zwischen dem Eingriffsteil und dem Verbindungsteil kann in vorteilhafter Weise unabhängig von der Verbindung zwischen dem Eingriffsteil und den Energieabsorptionselementen gestaltet und an die geforderte Funktionalität angepasst werden. Die zwischen dem Eingriffsteil und dem Verbindungsteil zu erwartenden Beanspruchungen können durch konstruktive Maßnahmen abgefangen werden, um sicherzustellen, dass eine sichere Trennung bei Aktivierung der Koppelvorrichtung im Crashfall erfolgt. Dabei kann eine Optimierung im Hinblick auf die Kopplung und Entkopplung von Eingriffs- und Verbindungsteil erfolgen, ohne Kompromisse eingehen zu müssen, die sich beispielsweise aus dem Verformungsverhalten der Energieabsorptionselemente ergeben können.

Dadurch, dass bei der Erfindung die Verbindung der Energieabsorptionselemente mit dem Eingriffsteil und dem Verbindungsteil unabhängig ist von der Funktionalität der Umschaltung der Energieabsorptionsvorrichtung, die erfindungsgemäß in die Trennung des Eingriffselement verlagert ist, besteht eine größere Gestaltungsfreiheit bezüglich der Ausbildung und räumlichen Anordnung der Energieabsorptionselemente. Dadurch kann eine bessere Anpassung an den zur Verfügung stehenden Bauraum erfolgen, beispielsweise durch Realisierung kleinerer Abmessungen oder vorgegebener Formgebungen.

Das erfindungsgemäße Eingriffsteil hat einen Eingriffsabschnitt, der zur lösbaren Verbindung mit dem Arretierteil ausgebildet ist, und beispielsweise Formschlusselemente aufweist, die als Verzahnungen oder dergleichen ausgebildet sein können. Ein erfindungsgemäßes Verbindungsteil ist mit dem Eingriffsteil außerhalb des Eingriffsabschnitts verbunden. Dabei kann ein Verbindungsteil vorgesehen sein, oder auch mehrere Verbindungsteile, die von dem Eingriffsteil zur Realisierung unterschiedlicher Crashniveaus durch eine oder mehrere Koppelvorrichtungen getrennt werden können. Die Verbindungsteile können jeweils Mitnehmerelemente aufweisen, welche ihrerseits mit dritten und gegebenenfalls weiteren Energieabsorptionselementen verbunden sein können. Durch Abtrennen eines oder mehrerer Verbindungsteile durch entsprechende Aktivierung der Koppelvorrichtungen können jeweils mit den Verbindungsteilen verbundene Energieabsorptionselemente wahlweise aus dem Kraftfluss zwischen äußerer Manteleinheit und innerem Mantelrohr ausgekoppelt werden, so dass unterschiedliche Crashniveaus realisierbar sind.

Eine Ausführung der Erfindung sieht vor, dass die Koppeleinrichtung einen Aktuator aufweist, der mit einem bewegbaren Koppelelement zusammenwirkt, welches zwischen dem Verbindungsteil und dem Eingriffsteil angeordnet ist und bei Aktivierung des Aktuators bewegbar ist zum Lösen des Verbindungsteils von dem Eingriffsteil. Das Koppelelement dient zur lösbaren Befestigung des Verbindungsteils an dem Eingriffsteil und ist an dem Aktuator angebracht. Bei Auslösung im Crashfall wirkt der Aktuator auf das Koppelelement und bewegt es in eine Löseposition, in der das Verbindungsteil von dem Eingriffsteil gelöst, d.h. mechanisch getrennt ist. Dadurch erfolgt die Umschaltung in den entkoppelten Zustand. Das Koppelelement kann optimiert werden, dass es einerseits im gekoppelten, verbundenen Zustand im Crashfall eine sichere Verbindung zwischen dem Verbindungsteil und dem Eingriffsteil herstellt, und andererseits durch den Aktuator im Bedarfsfall ebenfalls sicher in den entkoppelten, gelösten Zustand gebracht werden kann.

Das Eingriffsteil und/oder das Verbindungsteil können Formschlusselemente aufweisen, mit denen das Koppelelement zusammenwirkt. Im verbundenen Zustand kann das Koppelelement formschlüssig in die Formschlusselemente eingreifen und dadurch das Verbindungsteil und das Eingriffsteil formschlüssig miteinander koppeln oder verriegeln, so dass im Crashfall über den Formschluss die Kraft in Längsrichtung übertragen wird und das Verbindungsteil gemeinsam mit dem Eingriffsteil relativ zum inneren Mantelrohr bewegt wird. Durch Aktivierung des Aktuators kann das Koppelelement aus den Formschlusselementen heraus bewegt werden, so dass die Formschlussverbindung gelöst wird und dadurch das Verbindungsteil von dem Eingriffsteil getrennt ist.

Die Entkopplung kann dadurch begünstigt werden, dass das Koppelelement und/oder zumindest eines der Formschlusselemente reibungsmindernd ausgestaltet ist. Dabei kann zumindest eine der gegeneinander anliegenden, bei Betätigung des Aktuators aufeinander gleitenden Oberflächen eines Koppel- oder Formschlusselements beispielsweise ganz oder teilweise mit einer reibungsmindernden Beschichtung versehen sein, oder mit Gleitelementen, die durch Material oder Formgebung die Reibung verringern.

In einer Ausführung der Erfindung können die Formschlusselemente zumindest eine quer zur Längsrichtung verlaufende Formschlussöffnung aufweisen, in der das Koppelelement aufnehmbar ist. Die Formschlussöffnung kann sich beispielsweise in Umfangsrichtung tangential mit radialem Abstand zur Längsachse durch das Eingriffsteil und das Verbindungsteil erstrecken. Darin kann ein im Wesentlichen stiftförmiges Koppelelement zur Herstellung einer formschlüssigen Verbindung aufgenommen sein. Zur Trennung der Verbindung kann das Koppelelement einfach durch Aktivierung des Aktuators aus der Formschlussöffnung herausgezogen werden. Durch das in die Formschlussöffnung eingesetzte stiftförmige Koppelelement wird eine einfach aufgebaute und wirksame formschlüssige Verriegelung des Verbindungsteils mit dem Eingriffsteil erreicht. Das Entfernen des Koppelelements zum Trennen des Verbindungsteils kann sicher und mit geringem Aufwand bewerkstelligt werden. Dadurch ergibt sich ein funktionssicherer Aufbau, der flexibel und in einem relativ kleinen Bauraum realisierbar ist.

In einer vorteilhaften Weiterbildung kann es vorgesehen sein, dass das Eingriffsteil und/oder das Verbindungsteil als Fließpressbauteil oder als Sinterbauteil ausgebildet ist. Dadurch kann erreicht werden, dass das Eingriffsteil und/oder das Verbindungsteil in einfacher und kostengünstiger Art und Weise herstellbar ist.

Es ist weiterhin vorteilhaft, dass der Aktuator als pyroelektrischer Aktuator ausgebildet ist. Der pyroelektrische Aktuator ist zum pyrotechnischen Antrieb des Koppelelements ansteuerbar. Ein pyroelektrischer Aktuator, oft auch als "Pyroswitch" oder "Pyroschalter" bezeichnet, weist eine pyrotechnische Treibladung auf, die durch einen elektrischen Steuerimpuls gezündet wird. Die Explosion der Treibladung beschleunigt einen beweglichen Aktuator, der in der vorliegenden Anwendung mit einem Koppelelement verbunden ist. Dadurch kann das Koppelelement bewegt werden zur erfindungsgemäßen Trennung des Verbindungsteils von dem Eingriffsteil, oder auf andere Art eine mechanische Kopplung oder Entkopplung von Eingriffsteil und einem Verbindungsteil bewerkstelligen. Vorteile einer derartigen pyroelektrischen Koppelvorrichtung sind die extrem schnelle Auslösung im Crashfall sowie die hohe Zuverlässigkeit und Betätigungskraft, welche im Bedarfsfall eine sichere Einkopplung oder Auskopplung eines oder mehrerer Verbindungsteile gewährleistet. Beispielsweise kann das Koppelelement stiftförmig ausgebildet sein, und zur Entkopplung des Verbindungsteils von dem Eingriffsteil aus den Formschlusselementen pyrotechnisch herausgeschossen wird.

Eine Weiterbildung der Erfindung sieht vor, dass das Eingriffsteil und das Verbindungsteil miteinander in Eingriff bringbare Positionierelemente aufweisen. Die Positionierelemente können beispielsweise in Längsrichtung miteinander in Eingriff bringbare Formschlusselemente umfassen, beispielsweise Absätze, oder Nut-Feder-Elemente, die in verbundenem Zustand eine positionsgenaue relative Fixierung von Eingriffsteil und Verbindungsteil quer zur Längsrichtung bewirken. Dadurch ist gewährleistet, dass im gekoppelten, verbundenen Zustand Eingriffsteil und Verbindungsteil im Crashfall sicher gemeinsam bewegt werden.

Bevorzugt ist das Eingriffsteil über ein Sollbruchelement mit dem inneren Mantelrohr verbunden. Das Sollbruchelement kann beispielsweise als Losbrechniet, Scherbolzen oder dergleichen ausgebildet sein, welches beim Überschreiten einer definierten Grenzkraft, der soganannten Losbrechkraft, die nur im Crashfall in Längsrichtung zwischen äußerer Manteleinheit und Mantelrohr auftritt, bricht und dadurch die relative Bewegung des Eingriffsteils relativ zu dem am Mantelrohr abgestützten Energieabsorptionselementen freigibt. Dadurch ist sichergestellt, dass erst beim Überschreiten der Grenzkraft, also tatsächlich nur im Crashfall eine Krafteinleitung in die Energieabsorptionselemente erfolgt. Dadurch wird die Funktionssicherheit der Energieabsorptionseinrichtung gewährleistet.

Eine vorteilhafte Ausführung sieht vor, dass zumindest ein Energieabsorptionselement als U-förmiges Biegeelement ausgebildet ist, das zwei über eine Umbiegung miteinander verbundene Schenkel aufweist, wobei der eine Schenkel am Eingriffsteil oder am Verbindungsteil festlegbar ist und der andere Schenkel an dem inneren Mantelrohr in Längsrichtung abstützbar ist. Es ist bekannt, ein Energieabsorptionselement als Biegedraht oder Biegestreifen auszubilden, der durch eine Umbiegung von bevorzugt 180° U-förmig geformt ist, wobei sich die beiden einander gegenüberliegenden U-Schenkel im Wesentlichen parallel zur Längsrichtung erstrecken, wobei unter "im Wesentlichen parallel" eine Abweichung mit einem Raumwinkel von ±10°verstanden wird. Das Ende des einen Schenkels ist mit dem inneren Mantelrohr bezüglich einer Bewegung in Längsrichtung verbunden, beispielsweise indem es sich im Crashfall in Längsrichtung an einem Anschlag oder Widerlager am Mantelrohr abstützt. Das andere Ende ist zur Einleitung der Kraft mit dem Eingriffsteil oder dem Verbindungsteil über ein Mitnehmerelement verbunden, von dem besagtes Ende im Crashfall in Längsrichtung mitgenommen wird. Bei einer relativen Längsverschiebung der beiden Enden im Crashfall wandert die Durchbiegung in Längsrichtung über die Längserstreckung des Biegeelements, wobei durch Verformungsarbeit kinetische Energie umgesetzt bzw. absorbiert wird.

Bei der Erfindung können zwei oder mehrere identisch oder im Wesentlichen identisch ausgebildete Energieabsorptionselemente eingesetzt werden, beispielsweise baugleiche U-förmige Biegeelemente. Die Biegeelemente können auch im Wesentlichen identisch, d.h. zumindest gleichartig ausgebildet sein, zum Beispiel als Biegeelemente, die bei unterschiedlichem Energieabsorptionsvermögen gleiche Außenabmessungen aufweisen. Dadurch wird eine Austauschbarkeit realisiert, so dass durch Kombination unterschiedlicher Biegeelemente mir geringem Aufwand angepasste, schaltbare Energieabsorptionscharakteristiken erzeugt werden können.

Die beiden U-förmig ausgebildeten Biegeelemente können mit ihrer Umbiegung bevorzugt in Richtung der Fahrzeugfront angeordnet sein. Es ist aber auch denkbar und möglich, einen oder beide der U-förmig ausgebildeten Biegeelemente derart anzuordnen, dass die Umbiegungen in unterschiedliche Richtung oder in Richtung entgegen der Fahrzeugfront ausgerichtet sind. Weisen die Schenkel in unterschiedliche Richtungen, sind sie also gegeneinander oder voneinander weg gerichtet, wird im Crashfall das eine Biegeelement zusammengedrückt und das andere auseinander gezoge. Sind beide Biegeelemente mit ihren Schenkeln gleich ausgerichtet - nach vorn oder nach hinten - können im Crashfall beide Biegeelemente je nach Einbaulage durch relativen Druck oder Zug auf die Schenkel verformt werden.

Das Eingriffsteil und das Verbindungsteil können jeweils ein bolzenförmiges Mitnehmerelement aufweisen, welches mit einem Schenkel des Biegeelements in Eingriff steht. Das Biegeelement kann einen quer zur Längsrichtung umgebogenen Abschnitt aufweisen, in den das Mitnehmerelement formschlüssig eingreift und im Crashfall eine sichere Mitnahme in Längsrichtung gewährleistet. Ein vorteilhafter Unterschied der Erfindung zu den im Stand der Technik bekannten schaltbaren Energieabsorptionseinrichtungen ist, dass die Mitnehmerelemente unabhängig vom gekoppelten oder entkoppelten Zustand die Mitnehmerelemente mit den Biegeelementen in Eingriff stehen, und bei Aktivierung der Koppeleinrichtung nicht bewegt werden.

Bevorzugt sind die Biegeelemente so angeordnet, dass zumindest zwei Biegeelemente mit ihren Schenkeln in Längsrichtung gleich ausgerichtet sind. Dabei weisen die U-Schenkel von der Umbiegung aus gesehen parallel zur Längsachse in die gleiche Längsrichtung. Dadurch werden die Biegeelemente im Crashfall gleichartig verformt, was vorteilhaft ist im Hinblick auf reproduzierbare Energieabsorptionseigenschaften.

Zumindest zwei Energieabsorptionselemente können in Längsrichtung aufeinander folgend angeordnet sein. Bevorzugt sind die Biegeelemente separat ausgebildet und in Längsrichtung mit Abstand zueinander angeordnet. Dadurch kann eine flache, in radialer Richtung wenig Bauraum beanspruchende Bauweise realisiert werden. Damit, dass die Biegeelemente separat ausgebildet sind, ist gemeint, dass die mindestens zwei Biegeelemente nicht direkt miteinander verbunden sind, sondern jeweils für sich nur mit dem einen Schenkel mit dem Mantelrohr und mit dem anderen Schenkel mit dem Eingriffsteil oder den Verbindungsteil verbunden sind. Dadurch, dass die Biegeelemente in Längsrichtung Abstand voneinander haben, ist zusätzlich sichergestellt, dass im Crashfall keine gegenseitige Beeinträchtigung bei der energieabsorbierenden Verformung auftreten kann. Bevorzugt besteht ein positiver Abstand in Längsrichtung zwischen der Umbiegung des einen Biegeelements und den Enden der Schenkel des anderen Biegeelements.

Es ist vorteilhaft, dass die Energieabsorptionselemente in einem gemeinsamen Gehäuse angeordnet sind. Das Gehäuse bildet einen Teil der erfindungsgemäßen Energieabsorptionseinrichtung, der die Energieabsorptionselemente zumindest teilweise umschließt und gegen Störeinflüsse schützt. Weiterhin können in oder an dem Gehäuse Befestigungselemente für die Energieabsorptionselemente, Längsführungen für das Eingriffsteil und dergleichen ausgebildet werden. Dadurch sind die Energieabsorptionselemente geschützt untergebracht. Außerdem kann eine kompakte Bauweise in einem kleinen Bauraum realisiert werden. Die Koppelvorrichtung kann an dem Gehäuse angebracht sein, beispielsweise in Form eines pyroelektrischen Aktuators.

Zwischen den Energieabsorptionselementen kann ein Separierungselement angeordnet sein. Ein Separierungselement kann beispielsweise durch eine Trennwand oder ein zwischen benachbarte Energieabsorptionselemente eingelegtes Trennblech gebildet werden. Dadurch werden benachbarte Energieabsorptionselemente funktional voneinander abgeschirmt, so dass die Funktion eines Energieabsorptionselements nicht durch benachbarte Energieabsorptionselemente beeinflusst werden kann. Dies kommt einer erhöhten Betriebs- und Funktionssicherheit im Crashfall zugute.

Um eine sicherzustellen, dass die Verformung des oder der Energieabsorptionselemente im Crashfall gleichmäßig und ungestört erfolgt, kann zumindest ein Energieabsorptionselement, beispielsweise ein Biegeelement und/oder das Gehäuse mit einer Gleitbeschichtung versehen ist. Die Gleitbeschichtung wirkt reibungsmindernd und sorgt dafür, dass die Verformung des Biegedrahts oder Biegestreifens im Crashfall gleichmäßig abläuft und nicht durch Reibung oder Festfressen behindert wird, falls Teile der Biegeelemente miteinander oder mit umgebenden Bauteilen wie dem Gehäuse in Kontakt kommen. Dadurch wird die Funktionssicherheit erhöht.

Die Energieabsorptionselemente können in einem an dem inneren Mantelrohr angebrachten, radial offenen C-förmigen Innenprofil angeordnet sein. Dadurch wird die Herstellung vereinfacht, indem die Energieabsorptionselemente, beispielsweise Biegeelemente, von außen einfach in das offene Innenprofil eingesetzt werden. Das Innenprofil kann bevorzugt stoffschlüssig mit dem Mantelrohr verbunden sein, beispielsweise durch Verschweißung. Alternativ oder zusätzlich können zur Befestigung Formschlussverbindungen mit Befestigungselementen vorgesehen sein. In dem Innenprofil können Anschläge oder Widerlager ausgebildet sein, an denen sich die Biegeelemente mit einem Schenkel im Crashfall gegen das Mantelrohr in Längsrichtung abstützen.

Auf dem inneren Mantelrohr kann ein als Halteprofil ausgebildetes Gehäuse angeordnet sein mit einem in Längsrichtung langgestreckten Schlitz, durch den sich die Mitnehmerelemente des Eingriffsteils und des Verbindungsteils erstrecken. Das als Halteprofil ausgebildete Gehäuse dient als Deckel des Innenprofils und hält das Eingriffsteil. Die durch den Schlitz hindurchgeführten Mitnehmerelemente sorgen bei einer Längsbewegung des Eingriffsteils und gegebenenfalls des Verbindungsteils relativ zum Gehäuse im Crashfall für eine Zwangsführung in Längsrichtung. Dadurch wird die Funktionssicherheit erhöht.

Eine Ausführungsform der Erfindung sieht vor, dass die äußere Manteleinheit in einer Konsole gehalten ist, die am Fahrzeug fixierbar ist. Somit kann eine besonders steife Anbindung der Lenksäule am Fahrzeug realisiert werden.

Die Manteleinheit wird dabei bevorzugt an einem vorderen Ende der Konsole verschwenkbar um eine Schwenkachse gehalten und zwischen zwei Seitenwangen der Konsole aufgenommen, wobei mittels der Spanneinrichtung die Manteleinheit gegenüber der Konsole festsetzbar ist.

Durch die Bereitstellung der Schwenkachse zwischen der Manteleinheit und der Konsole kann die Neigungsverstellung der Manteleinheit gegenüber der Konsole realisiert werden. Somit kann die Neigungsverstellung, auch Höhenverstellung genannt, der Manteleinheit noch vereinfacht werden, im Gegensatz zur Anbringung der Manteleinheit direkt am Fahrzeug mittels einer Achse die durch eine Aufnahmebohrung der Manteleinheit und einer entsprechenden Aufnahmeabschnitts des Fahrzeugquerträgers gesteckt werden muss, um die Schwenkachse bereitzustellen.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in perspektivischer Darstellung,
- Figur 2: die Lenksäule gemäß Figur 1 in teilweise auseinandergezogenem Zustand,
- Figur 3: eine Detailansicht des inneren Mantelrohrs mit Spanneinrichtung und der Energieabsorptionseinrichtung der Lenksäule gemäß Figur 1,
- Figur 4: das Mantelrohr mit der Spanneinrichtung und der Energieabsorptionseinrichtung gemäß Figur 1 in einer teilweise auseinandergezogenen Darstellung,
- Figur 5: einen Längsschnitt durch die Spanneinrichtung der Lenksäule gemäß Figur 1 bis 4 in Fixierstellung der Spanneinrichtung,
- Figur 6: einen Längsschnitt durch die Spanneinrichtung der Lenksäule gemäß Figur 1 bis 4 in Freigabestellung der Spanneinrichtung,
- Figur 7: die Energieabsorptionseinrichtung der Lenksäule gemäß Figur 1 bis 6 mit hohem Crashniveau vor einem Crash,
- Figur 8: die Energieabsorptionseinrichtung gemäß Figur 7 mit hohem Crashniveau nach einem Crash,
- Figur 9: die Energieabsorptionselemente in dem Zustand gemäß Figur 7 in einer Seitenansicht,
- Figur 10: die Energieabsorptionselemente in dem Zustand gemäß Figur 8 in einer Seitenansicht,
- Figur 11: die Energieabsorptionseinrichtung der Lenksäule gemäß Figur 7 mit niedrigem Crashniveau vor einem Crash,
- Figur 12: die Energieabsorptionseinrichtung gemäß Figur 7 mit niedrigem Crashniveau nach einem Crash,
- Figur 13: die Energieabsorptionselemente in dem Zustand gemäß Figur 12 in einer Seitenansicht,
- Figur 14: ein Energieabsorptionselement, und
- Figur 15: eine Detailansicht eines inneren Mantelrohrs mit einer Spanneinrichtung und der Energieabsorptionseinrichtung der Lenksäule in einer alternativen Ausführungsform.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

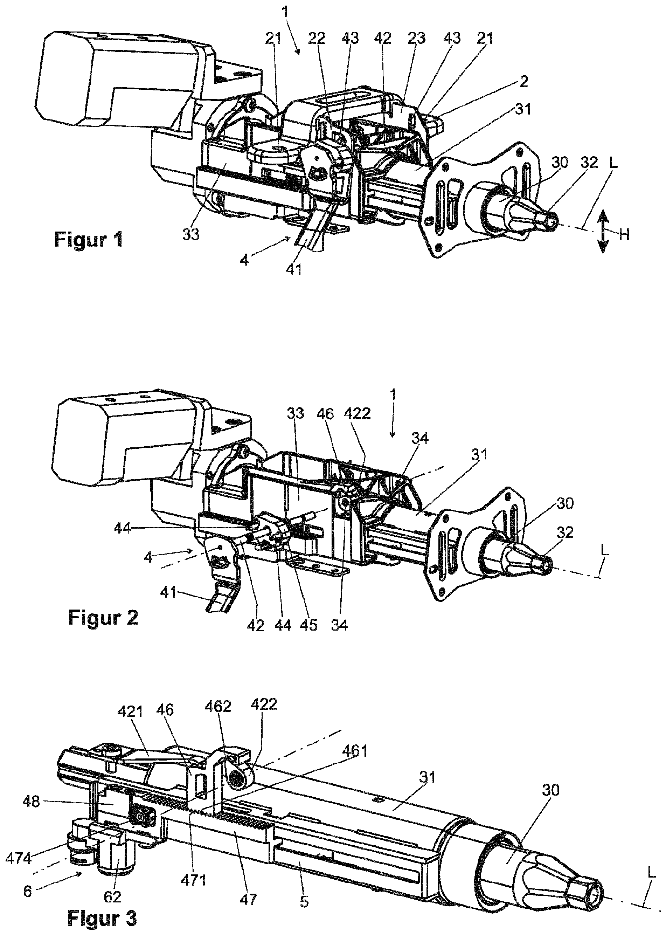

In Figuren 1 und 2 ist eine erfindungsgemäße Lenksäule 1 schematisch in perspektivischer Ansicht schräg von hinten (bezogen auf die Fahrtrichtung eines nicht gezeigten Kraftfahrzeugs) dargestellt.

Die Lenksäule 1 kann an der Karosserie eines nicht dargestellten Kraftfahrzeugs mittels einer Konsole 2 befestigt werden, die der Übersichtlichkeit halber in der Ansicht von Figur 2 weggelassen ist. Die Konsole 2 umfasst zur Verbindung mit der Karosserie Befestigungsmittel 21, von denen sich Seitenwangen 22, 23 erstrecken.

Eine Lenkspindel 30 ist um die Längsachse L drehbar in einem inneren Mantelrohr 31, kurz als Mantelrohr 31 bezeichnet, gelagert, wobei auf dem hinteren Ende 32 ein nicht dargestelltes Lenkrad auf der Lenkspindel 30 anbringbar ist. Das innere Mantelrohr 31 ist in einer in Längsrichtung durchgehenden Aufnahme einer äußeren Manteleinheit 33, kurz Manteleinheit 33, gehaltert.

Eine Spanneinrichtung 4 kann durch manuelle Betätigung eines Spannhebels 41 wahlweise in Fixierstellung (Feststellposition, geschlossener Zustand) oder Freigabestellung (Löse-position, geöffneter Zustand) gebracht werden. Dabei ist in Freigabestellung das innere Mantelrohr 31 zur Längsverstellung in Richtung der Längsachse L innerhalb der äußeren Manteleinheit 33 teleskopartig verschiebbar, und die äußere Manteleinheit 33 ist in Höhenrichtung H relativ zur Konsole 2 in den Pfeilrichtungen auf und ab verstellbar. In Fixierstellung ist sowohl das innere Mantelrohr 31 in Längsrichtung als auch die äußere Manteleinheit 33 in Höhenrichtung H fixiert. Die Fixierstellung entspricht dem Normalbetrieb der Lenksäule 1, in dem sichergestellt ist, dass bei den üblicherweise über das Lenkrad auf die Lenkspindel 30 einwirkenden Kräften die eingestellte Lenkradposition nicht verändert wird.

Im Einzelnen umfasst die Spanneinrichtung 4 einen drehfest mit dem Spannhebel 41 verbundenen Spannbolzen 42, welcher quer zur Längsachse L durch Langlöcher 43 in den einander gegenüberliegenden Seitenwangen 22, 23 hindurchgeführt ist. Über eine an sich bekannte Spannmechanik, die wie in der dargestellten Ausführung drehfest an dem Spannbolzen 42 abgestützte Kippstiftanordnung 44 und eine dieser gegenüberliegende, drehfest an der Seitenwange 22 angeordneten Stützscheibe 45 umfassen kann, wird bei einer Drehung die Stützscheibe 45 relativ zum Spannbolzen 42 axial verlagert und so von außen gegen die Seitenwange 22 angedrückt. Dadurch, dass der Spannbolzen 42 an der gegenüberliegenden Seitenwange 23 axial unverschiebbar gelagert ist, werden die beiden Seitenwangen 22 und 23 gegeneinander bewegt, und die dazwischen angeordnete äußere Manteleinheit 33 kraftschlüssig festgeklemmt. Anstelle der gezeigten Kippstiftanordnung 44, 45 können auch andere Mechanismen zur Umsetzung einer Drehung in eine Klemmbewegung zum Einsatz kommen, beispielsweise mit Nockenscheiben oder Wälzkörpern. Alternativ ist es denkbar und möglich, dass die Spanneinrichtung als elektro-mechanische Spanneinrichtung ausgebildet ist, bei der die Überführung von der Freigabestellung in die Fixierstellung und vice versa mittels eines Elektromotors erfolgt.

Der Spannbolzen 42 ist durch einander quer zur Längsachse L gegenüberliegende Öffnungen 34 in der Manteleinheit 33 hindurchgeführt, die ähnlich einer Spannhülse zwischen den Öffnungen 34 in Längsrichtung geschlitzt ausgebildet ist. Dadurch wird bei der beschriebenen Verspannung der Seitenwangen 22, 23 der Konsole 2 durch die Klemmkraft die äußere Manteleinheit 33 quer zur Längsachse L zusammengedrückt, so dass die Fixierstellung eingestellt ist, wobei das innere Mantelrohr 31 kraftschlüssig in der Manteleinheit 33 festgeklemmt ist. Die Manteleinheit 33 weist einen Schlitz in Richtung der Längsachse L auf, der im Bereich des Klemmbolzens 42 ausgebildet ist, wobei der Schlitz in der Fixierstellung eine reduzierte Breite in Folge der wirkenden Klemmkraft aufweist, als in der Freigabestellung. Durch diese reduzierte Breite wird ein Innendurchmesser der Manteleinheit 33 reduziert, wodurch das innere Mantelrohr 31 in der Manteleinheit 33 festgeklemmt ist.

Die Spanneinrichtung 4 weist ein Arretierteil 46 und ein Eingriffsteil 47 auf. Das Arretierteil 46 ist in Längsrichtung, d.h. in Richtung der Längsachse L unverschiebbar in der Manteleinheit 33 gelagert. In Höhenrichtung H ist das Arretierteil 46 zur Einstellung der Fixier- und Freigabestellung auf und ab bewegbar gelagert. Das Eingriffsteil 47 ist über eine Energieabsorptionseinrichtung 5 mit dem Mantelrohr 31 verbunden. Auf ihren quer zur Längsachse L gegeneinander gerichteten Seiten haben das Arretierteil 46 und das Eingriffsteil 47 korrespondierende, miteinander formschlüssig in Eingriff bringbare Verzahnungen 461 und 471 mit quer zur Längsachse L verlaufenden Zähnen.

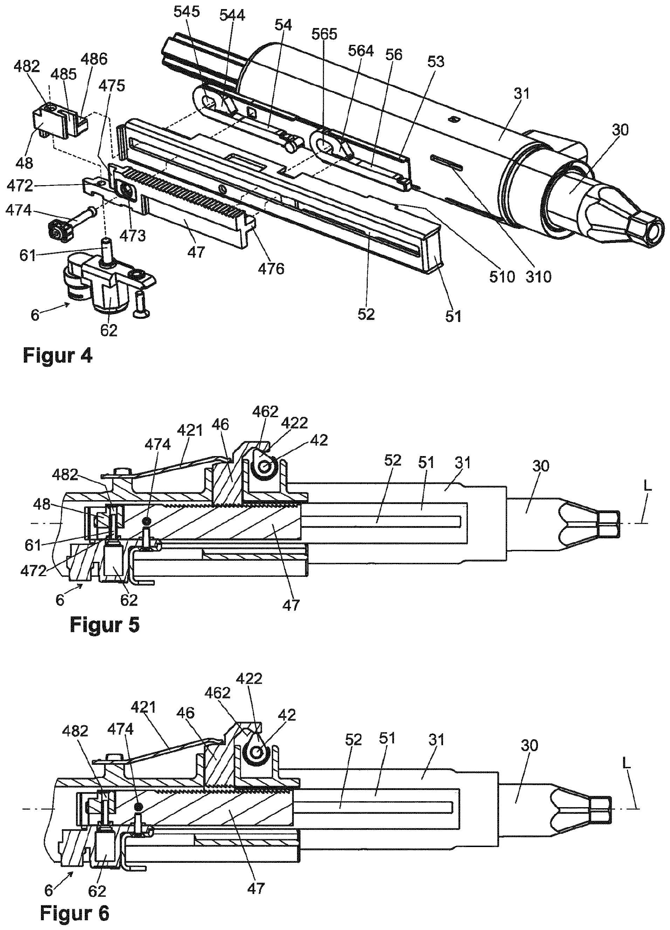

In Fixierstellung der Spanneinrichtung 4 wird das Arretierteil 46 von einer an der Manteleinheit 33 abgestützten Feder 421 gegen das Eingriffsteil 47 angepresst, wodurch die Verzahnungen 461und 471 in formschlüssigem Eingriff gehalten werden. Durch die ineinandergreifenden, quer zur Längsachse L verlaufenden Zähne sind das Arretierteil 46 und das Eingriffsteil 47 in Fixierstellung in Längsrichtung unverschiebbar formschlüssig miteinander verbunden. Dies ist in Figur 5 deutlich erkennbar.

Auf dem Spannbolzen 42 ist ein exzentrischer Nocken 422 angebracht, der mit einer Nockenbahn 462 des Arretierteils 46 zusammenwirkt. Wird der Spannbolzen 42 aus der in Figur 5 dargestellten Fixierstellung durch Drehung des Spannhebels 41 im Uhrzeigersinn in die in Figur 6 gezeigte Freigabestellung gebracht, wird der Nocken 422 gegen die Nockenbahn 462 bewegt und hebt das Arretierteil 46 entgegen der Federkraft der Feder 421 an - in den Figuren nach oben - so dass die Verzahnungen 461 und 471 voneinander abgehoben und somit außer Eingriff gebracht werden. In dieser Freigabeposition ist - wie oben beschrieben - die Klemmung des Mantelrohrs 31 in der Manteleinheit 33 gelöst, so dass das Mantelrohr 31 in Längsrichtung parallel zur Längsachse L in der Manteleinheit 33 leicht vor oder zurück bewegt werden kann.

Erfindungsgemäß weist das Eingriffsteil 47 ein Verbindungsteil 48 auf. Das Verbindungsteil 48 bildet ein separates Teil, welches über eine Koppelvorrichtung 6 mit dem Eingriffsteil 47 verbunden ist. Die Auslösung der Koppelvorrichtung 6 ermöglicht es, die mechanische Verbindung zwischen dem Eingriffsteil 47 und dem Verbindungsteil 48 zu lösen, so dass diese voneinander getrennt werden und in Längsrichtung unabhängig voneinander bewegbar sind, wie im Folgenden erläutert wird.

Die Koppelvorrichtung 6 umfasst ein stiftförmiges Koppelelement 61, welches an einem pyroelektrischen Aktuator 61 angebracht ist. Bei Auslösung bzw. Betätigung des Aktuators 61 wird eine pyrotechnische Treibladung gezündet, durch die das Koppelelement 61 in seiner Achsrichtung in Richtung zum Aktuator 61 bewegt wird, in den Figuren nach unten.

Der Aktuator 61 ist an dem Eingriffsteil 47 befestigt, wobei das Koppelelement 61 eine quer zur Längsachse L verlaufende Formschlussöffnung 472 sowie eine koaxial dazu im Verbindungsteil 48 ausgebildete Formschlussöffnung 482 durchsetzt. Dadurch wird der gekoppelte Zustand realisiert, der auch als verbundener Zustand bezeichnet wird, in dem das Eingriffsteil 47 mit dem Verbindungsteil 48 in Längsrichtung durch die Koppelvorrichtung 6 verbunden ist. Dadurch werden bei einer Krafteinleitung über das Arretierteil 46 im Crashfall das Eingriffsteil 47 und das Verbindungsteil 48 gemeinsam in Längsrichtung bewegt.

Der gekoppelte Zustand ist in den Figuren 5, 6, 7, 8, 9 und 10 dargestellt.

Wird die Koppelvorrichtung 6 gezündet, bewegt der Aktuator 62 das Koppelement 61 aus der Formschlussöffnung 482 heraus, so dass der entkoppelte Zustand eingenommen wird, der auch als getrennter Zustand bezeichnet wird, in dem das Eingriffsteil 47 und das Verbindungsteil 48 voneinander mechanisch getrennt wird. In dem entkoppelten Zustand wird bei einer Krafteinleitung über das Arretierteil 46 im Crashfall nur das Eingriffsteil 47 relativ zum inneren Mantelrohr 31 Längsrichtung mitgenommen. Das Verbindungsteil 48 bleibt bezüglich des Mantelrohrs 31 in Ruhe.

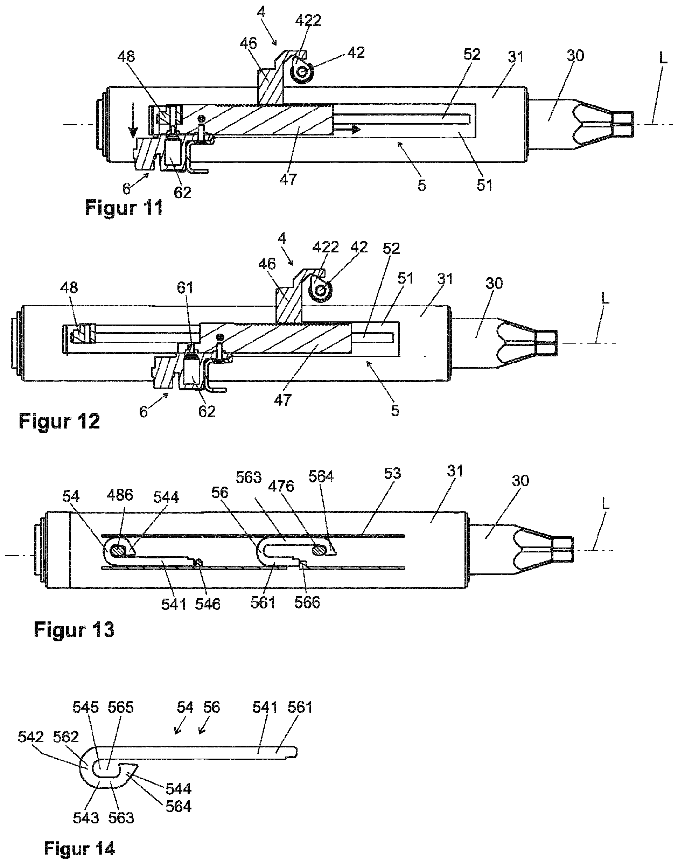

Der entkoppelte Zustand ist in den Figuren 11, 12 und 13 dargestellt.

Das Verbindungsteil 48 weist ein Positionierelement 485 in Form einer in Längsrichtung offenen Nut auf, in die ein an dem Eingriffsteil 47 ausgebildetes korrespondierendes Positionierelement 475 in Form eines passenden Vorsprungs nach Art einer Nut-Feder-Verbindung in Längsrichtung einsetzbar ist. Dadurch sind das Eingriffsteil 47 und das Verbindungsteil 48 quer zur Längsrichtung formschlüssig relativ zueinander positioniert.

Das Eingriffsteil 47 weist eine Befestigungsöffnung 473 auf, durch die ein Sollbruchelement in Form eines Scherbolzens 474 hindurch geführt ist, der fest mit dem Mantelrohr 31 verbunden ist und das Eingriffsteil 47 hält.

Die Energieabsorptionseinrichtung 5 ist an dem inneren Mantelrohr 31 auf einer Seite angebracht, und zwar in sämtlichen Figuren auf der dem Betrachter zugewandten Seite. Die Energieabsorptionseinrichtung 5 weist ein Gehäuse (Halteprofil) 51 in Form einer C-förmigen Schiene mit im Wesentlichen rechteckigem Querschnitt auf, die fest mit dem inneren Mantelrohr 31 verbunden ist und sich in Längsrichtung erstreckt, wobei der offene Querschnitt gegen die Außenseite des inneren Mantelrohrs 31 gerichtet ist. Mittels Formschlusselementen 510, die in korrespondierende Aufnahmeöffnungen 310 in dem inneren Mantelrohr 31 eingreifen, ist das Halteprofil 51 fest mit dem Mantelrohr 31 beispielsweise mittels Laserschweißen verbunden. Auf diese Weise bildet das als Halteprofil ausgebildete Gehäuse 51 zusammen mit dem inneren Mantelrohr 31 ein langgestrecktes Gehäuse der Energieabsorptionseinrichtung 5 mit im Wesentlichen rechteckigem Innenquerschnitt, welches sich auf einer Seite des Mantelrohrs 31 parallel zur Längsachse L erstreckt. Auf seiner radial nach außen gerichteten Außenseite weist das als Halteprofil ausgebildete Gehäuse 51 einen sich parallel zur Längsachse L erstreckenden Schlitz 52 auf.

In dem Halteprofil 51 ist ein ebenfalls C-förmiges Innenprofil 53 angeordnet, welches sich in Längsrichtung erstreckt und nach außen, d.h. zum Halteprofil 51 hin offen ist. Das Innenprofil 53 kann fest mit dem Mantelrohr 31 verbunden sein, beispielsweise durch Verschweißen, und kann aus Federstahlblech ausgebildet sein. In dem Innenprofil 53 sind - in Längsrichtung gesehen - mit Abstand in Längsrichtung ein erstes Energieabsorptionselement 54 und ein zweites Energieabsorptionselement 56 angeordnet.

In Figur 14 sind die im gezeigten Beispiel gleich geformten und hinsichtlich ihrer grundsätzlichen Funktion identischen Energieabsorptionselemente 54 und 56 dargestellt. Diese sind jeweils als U-förmiger Biegedraht bzw. Biegestreifen gestaltet, mit einem ersten Schenkel 541 bzw. 561, der über eine Umbiegung 542 bzw. 562 von 180° mit einem zweiten Schenkel 543 bzw. 563 verbunden ist. Am Ende des zweiten Schenkels 543 bzw. 563 ist jeweils ein Mitnehmerhaken 544 bzw. 564 durch eine Umbiegung gegen den ersten Schenkel 541 bzw. 561 ausgebildet. Somit wird durch die Schenkel 541, 543, die Umbiegung 542 und den Mitnehmerhaken 544, bzw. durch die Schenkel 561, 563, die Umbiegung 562 und den Mitnehmerhaken 564 jeweils eine Eingriffsöffnung 545 bzw. 565 eines Energieabsorptionselements 54 bzw.56 geformt. Die Energieabsorptionselemente 54 und 56 können als Stanzteile ausgebildet sein, so dass eine kostengünstige Herstellung gewährleistet ist.

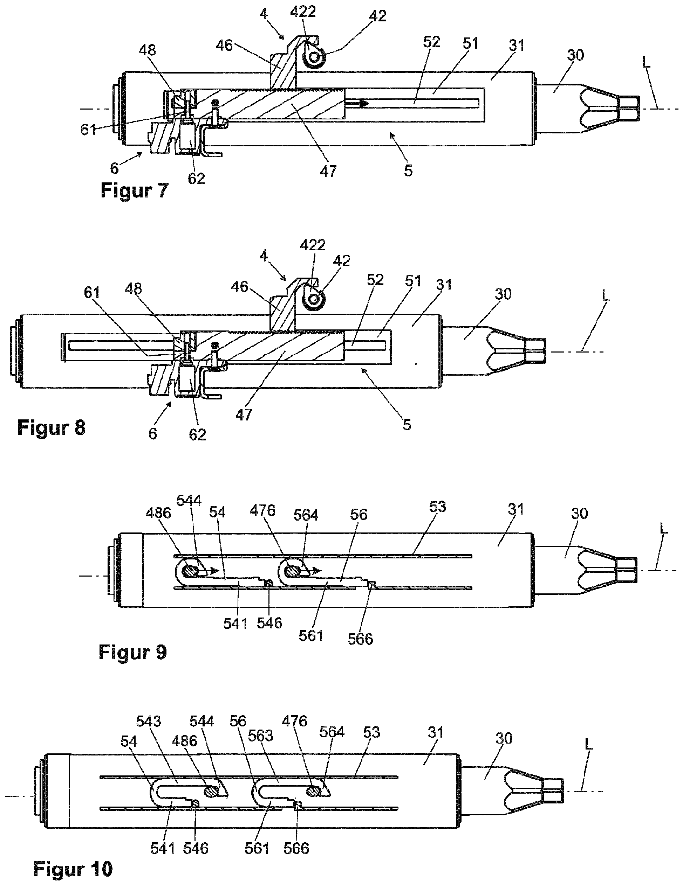

Mit ihrem ersten Schenkel 541 bzw. 561 stützen sich die Energieabsorptionselemente 54 und 56 entgegen der Längsrichtung (Pfeil in Figur 7, 9, 11, 13) gegen nach innen in den Querschnitt des Innenprofils 53 vorspringende Widerlager 546 bzw. 566 ab, welche jeweils einen Anschlag in Längsrichtung bilden.

Das Eingriffselement 47 weist ein Mitnehmerelement 476 auf, und das Verbindungselement 48 weist ein Mitnehmerelement 486 auf, wie in Figur 4 erkennbar.

Auf dem Halteprofil 51 sind das Eingriffsteil 47 und das Verbindungselement 48 derart angebracht, dass die Mitnehmerelemente 476 und 486 durch den Schlitz 52 hindurch in die Eingriffsöffnungen 545 und 565 der Energieabsorptionselemente 54 und 56 eingreifen. Dadurch kann das Eingriffsteil 47 in Längsrichtung parallel zur Längsachse L in dem Schlitz 52 des als Halteprofil ausgebildeten Gehäuses 51 geführt mit dem Mitnehmerelement 476 hinter den Mitnehmerhaken 564 des Energieabsorptionselements 56 eingreifen und dieses im Crashfall verbiegen, d.h. plastisch verformen. Entsprechend kann das Verbindungsteil 48 in Längsrichtung parallel zur Längsachse L in dem Schlitz 52 des Halteprofils 51geführt mit dem Mitnehmerelement 486 hinter den Mitnehmerhaken 544 des Energieabsorptionselements 54 eingreifen und dieses im Crashfall verbiegen, d.h. plastisch verformen.

Die Figuren 7, 8, 11 und 12 zeigen jeweils eine Seitenansicht auf das Mantelrohr 31 mit der daran angeordneten Energieabsorptionseinrichtung 5 und der Spanneinrichtung 4 in unterschiedlichen Betriebszuständen. Die Spanneinrichtung 4 befindet sich in Fixierstellung, in der das Arretierteil 46 an der hier nicht gezeigten äußeren Manteleinheit 33 in Längsrichtung abgestützt ist uns mit seiner Verzahnung 461 das Eingriffsteil 47 bezüglich der Manteleinheit 33 fixiert.

In Figur 7 befindet sich die Koppelvorrichtung 6 im Ruhezustand, in dem das stiftförmige Koppelelement 61 in den koaxialen Formschlussöffnungen 472 und 482 aufgenommen ist. Dadurch werden das Eingriffsteil 47 und das Verbindungselement 48 durch die Koppelvorrichtung 6 in Längsrichtung miteinander gekoppelt, d.h. mechanisch in Längsrichtung miteinander verbunden. Diese Einstellung bildet den gekoppelten Zustand, der auch als verbundener Zustand bezeichnet wird.

Das Mitnehmerelement 486 des Verbindungsteils 48 und das Mitnehmerelement 476 des Eingriffsteils 47 sind durch den Schlitz 52 hindurchgeführt und greifen in die Eingriffsöffnungen 545 bzw. 565 hinter die Mitnehmerhaken 544 bzw. 564 der Energieabsorptionselemente 54 bzw. 56 ein, wie in Figur 9 dargestellt ist, wobei das Halteprofil 52 weggelassen ist.

Figur 7 zeigt den normalen Betriebszustand. Im Crashfall wird durch einen auf das nicht dargestellte Lenkrad aufprallenden Körper eine hohe Kraft in Längsrichtung auf die Lenkspindel 30 ausgeübt. Dadurch die zwischen dem Mantelrohr 31 und der Manteleinheit 33 durch die Spanneinrichtung 4 kraftschlüssig wirkende Haltekraft überwunden, und durch die dabei auftretende Relativbewegung zwischen dem Eingriffsteil 47 und dem Mantelrohr 31 wird der Scherbolzen 474 gebrochen. Das Eingriffsteil 47 bewegt sich zusammen mit dem daran angekoppelten Verbindungsteil 48 in der in Figur 7 durch den Pfeil angezeigten Längsrichtung relativ zum Mantelrohr 31 und der daran befestigten Energieabsorptionseinrichtung 5 in die in Figur 8 gezeigte Längsposition. Dabei werden die Mitnehmerelemente 476 und 486 in dem Schlitz 52 in Längsrichtung geführt.

Im Crashfall werden die beiden Energieabsorptionselemente 54 und 56 durch die Mitnehmerelemente 476 und 486 - die sich in der in Figur 9 mit den Pfeilen angegebenen Längsrichtung relativ zu den Widerlagern 546 und 566 bewegen - mitgenommen und unter Energieabsorption verformt, bis der in Figur 10 dargestellte Endzustand erreicht ist.

In dem in Figuren 7, 8, 9 und 10 dargestellten gekoppelten Zustand von Eingriffsteil 47 und Verbindungselement 48 werden diese im Crashfall gemeinsam bewegt und beide Energieabsorptionselemente 54 und 56 werden zusammen verformt, wodurch ein hohes Crashniveau mit hoher Energieabsorption realisiert wird.

Im gezeigten bevorzugten Ausführungsbeispiel sind die beiden U-förmig ausgebildeten Biegeelemente 54 und 56 mit ihrer Umbiegung 542 bzw. 562 in Richtung der Fahrzeugfront angeordnet. Es ist aber auch denkbar und möglich, einen oder beide der U-förmig ausgebildeten Biegeelemente 54 und 56 derart anzuordnen, dass die Umbiegungen 542 bzw. 562 in unterschiedliche Richtungen oder beide in Richtung entgegen der Fahrzeugfront ausgerichtet sind.

Im Ausführungsbeispiel sind beide der abgestützten ersten Schenkel 541 bzw. 561 an der Unterseite angeordnet, wie der Figur 9 beispielsweise zu entnehmen ist. Weiter ist es auch denkbar und möglich, einen oder beide der abgestützten ersten Schenkel 541 bzw. 561 an der Oberseite anzuordnen.

Figur 11 und Figur 12 zeigen den entkoppelten oder getrennten Zustand. Dadurch, dass der Aktuator 61 aktiviert worden ist, wurde das Koppelelement 61 in seiner Achsrichtung aus der Formschlussöffnung 482 des Verbindungsteil 48 herausgezogen, wie in Figur 11 mit dem Pfeil in Höhenrichtung angedeutet, wodurch die mechanische Verbindung in Längsrichtung getrennt ist.

Im Crashfall wirkt, wie vorangehend beschrieben eine Relativkraft in Längsrichtung auf das Eingriffselement 47, so dass dieses sich wie mit dem Pfeil in Längsrichtung in Figur 11 angedeutet relativ zum Halteprofil 51 bewegt.

Im Unterschied zu dem in den Figuren 7 und 8 gezeigten gekoppelten Zustand wird in dem gelösten Zustand zwar das Eingriffsteil 47 bewegt, das getrennte, abgekoppelte Verbindungselement 48 verbleibt unabhängig davon jedoch relativ zu dem Mantelrohr 31 und der Energieabsorptionseinrichtung 5 in Ruhe, wie in Figur 12 deutlich erkennbar ist. Durch das im Crashfall von dem Eingriffsteil 47 getrennte Verbindungsteil 48 wird auch nur das eine, mit dem Eingriffsteil 47 verbundene Energieabsorptionselement 56 zur Energieabsorption verformt, wie Figur 13 entnehmbar ist, welches die Situation nach dem Crashfall analog zu Figur 10 zeigt. Das mit dem abgekoppelten Verbindungsteil 48 verbundene Energieabsorptionselement 54 ist unverformt geblieben, hat also keine Energie aufgenommen. Somit wurde durch Aktivierung der Koppelvorrichtung 6 und die dadurch bewirkte Trennung von Eingriffsteil 47 und Verbindungsteil 48 ein niedrigeres Crashniveau mit geringerer Energieabsorption realisiert.

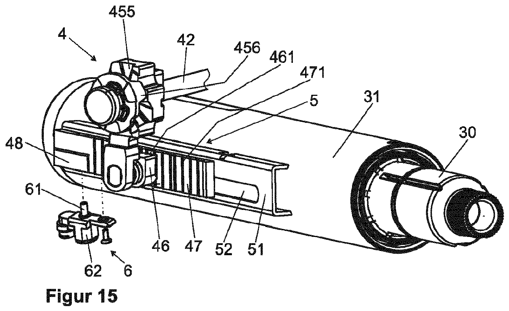

Figur 15 zeigt eine Detailansicht eines inneren Mantelrohrs 31 mit einer Spanneinrichtung 4 und der Energieabsorptionseinrichtung 5 einer Lenksäule in einer alternativen Ausführungsform. Die Spanneinrichtung umfasst einen Spannbolzen 42, der mit einer ersten Nockenscheibe 456 drehfest verbunden ist. Die erste Nockenscheibe 456 ist mit einem nicht gezeigten Hebel drehfest verbindbar, wobei die erste Nockenscheibe 456 mit einer zweiten Nockenscheibe 455 zusammenwirkt und bei einer Relativverdrehung der ersten Nockenscheibe 456 gegenüber der zweiten Nockenscheibe 455 ein Klemmhub erzeugt wird, wobei die zweite Nockenscheibe 455 in Richtung der Spannachse verlagert wird. Die zweite Nockenscheibe umfasst einen Auslegerarm, wobei ein Arretierteil 46 mit dem Auslegerarm verbunden ist. Das Arretierteil 46 umfasst eine Verzahnung 461, die mit einer Verzahnung 471 des Eingriffsteils 47 in Eingriff bringbar ist. Erfindungsgemäß weist das Eingriffsteil 47 ein Verbindungsteil 48 auf. Eine Koppelvorrichtung 6 koppelt das Eingriffsteil 47 mit dem Verbindungsteil 48. Die Auslösung der Koppelvorrichtung 6 ermöglicht es, die mechanische Verbindung zwischen dem Eingriffsteil 47 und dem Verbindungsteil 48 zu lösen, so dass diese voneinander getrennt werden und in Längsrichtung unabhängig voneinander bewegbar sind. Das Eingriffsteil 47 ist über eine Energieabsorptionseinrichtung 5 mit dem Mantelrohr 31 verbunden. Auf ihren quer zur Längsachse L gegeneinander gerichteten Seiten haben das Arretierteil 46 und das Eingriffsteil 47 korrespondierende, miteinander formschlüssig in Eingriff bringbare Verzahnungen 461 und 471 mit quer zur Längsachse L und quer zum Spannbolzen 42 verlaufenden Zähnen.

Dank der Erfindung kann eine Lenksäule 1 mit einer einzigen Energieabsorptionsvorrichtung 5, welche die Aktivierung unterschiedlicher Crashniveaus ermöglicht, mit geringerem Fertigungsaufwand besonders kompakt und kostengünstig bereitgestellt werden. Dadurch, dass die Koppeleinrichtung 6 nicht unmittelbar auf die Verbindungen zwischen dem Eingriffsteil 47 bzw. dem Verbindungsteil 48 und den Energieabsorptionselementen 56 bzw. 54 einwirkt, kann eine besonders zuverlässige Funktion bei einer flexiblen Ausnutzung des zur Verfügung stehenden Bauraums realisiert werden.

### Bezugszeichenliste

- 1: Lenksäule
- 2: Konsole
- 21: Befestigungsmittel
- 22, 23: Seitenwangen
- 30: Lenkspindel
- 31: (inneres) Mantelrohr
- 32: Ende
- 33: (äußere) Manteleinheit
- 4: Spanneinrichtung
- 41: Spannhebel
- 42: Spannbolzen
- 421: Feder
- 422: Nocken
- 43: Langloch
- 44: Kippstiftanordnung
- 45: Stützscheibe
- 46: Arretierteil
- 461, 471: Verzahnung
- 462: Nockenbahn
- 47: Eingriffsteil
- 472: Formschlussöffnung
- 473: Befestigungsöffnung
- 474: Scherbolzen
- 475, 485: Positionierelement
- 476, 486: Mitnehmerelement
- 48: Verbindungsteil
- 482: Formschlussöffnung
- 5: Energieabsorptionseinrichtung
- 51: Halteprofil
- 510: Formschlusselemente
- 52: Schlitz
- 53: Innenprofil
- 54, 56: Energieabsorptionselement
- 541, 561: erster Schenkel
- 542, 562: Umbiegung
- 543, 563: zweiter Schenkel
- 544, 564: Mitnehmerhaken
- 545, 565: Eingriffsöffnung
- 546, 566: Widerlager
- 6: Koppelvorrichtung
- 61: Koppelelement
- 62: pyroelektrischer Aktuator
- L: Längsachse
- H: Höhenrichtung

## Patentansprüche

1. Lenksäule (1) für ein Kraftfahrzeug, umfassend
ein inneres Mantelrohr (31), in dem eine Lenkspindel (30) um ihre Längsachse (L) drehbar gelagert ist,
eine äußere Manteleinheit (33), in der das innere Mantelrohr (31) gehaltert ist, und die mit der Karosserie eines Kraftfahrzeugs direkt oder indirekt verbindbar ist, eine Spanneinrichtung (4), die in Fixierstellung die äußere Manteleinheit (33) relativ zu dem inneren Mantelrohr (31) festlegt und die in Freigabestellung eine Verstellung des inneren Mantelrohrs (31) relativ zur äußeren Manteleinheit (33) zumindest in Längsrichtung freigibt,
wobei die Spanneinrichtung (4) mindestens ein Arretierteil (46) aufweist, welches sich in Längsrichtung an der äußeren Manteleinheit (33) abstützt und in Fixierstellung in Längsrichtung unverschiebbar mit einem Eingriffsteil (47) verbunden ist, welches mit dem inneren Mantelrohr (31) verbunden ist, und in Freigabestellung von dem Eingriffsteil (47) gelöst ist und eine relative Bewegung des inneren Mantelrohrs (31) zur äußeren Manteleinheit (33) in Längsrichtung freigibt,
wobei das innere Mantelrohr (31) und die äußere Manteleinheit (33) über eine Energieabsorptionseinrichtung (5) gekoppelt sind, die zumindest zwei Energieabsorptionselemente (54, 56) und eine Koppelvorrichtung (6) aufweist,
wobei über die Koppelvorrichtung (6) zumindest eines der Energieabsorptionselemente (54, 56) zwischen dem inneren Mantelrohr (31) und der äußeren Manteleinheit (33) einkoppelbar oder auskoppelbar ist, welches in eingekoppeltem Zustand in Fixierstellung der Spanneinrichtung (4) bei einer relativen Verschiebung in Längsrichtung von innerem Mantelrohr (31) und äußerer Manteleinheit (33) plastisch verformbar ist,
wobei das Eingriffsteil (47) ein erstes Mitnehmerelement (476) aufweist, welches mit dem ersten Energieabsorptionselement (56) in Wirkeingriff bringbar ist, **dadurch gekennzeichnet,**
**dass** das Eingriffsteil (47) mindestens ein Verbindungsteil (48) aufweist, das ein zweites Mitnehmerelement (486) aufweist, welches mit dem zweiten Energieabsorptionselement (54) in Wirkeingriff bringbar ist, wobei das Eingriffsteil (47) und das Verbindungsteil (48) über die Koppelvorrichtung (6) in Längsrichtung voneinander trennbar verbunden sind.

2. Lenksäule nach Anspruch 1, **dadurch gekennzeichnet, dass** die Koppeleinrichtung (6) einen Aktuator (62) aufweist, der mit einem bewegbaren Koppelelement (61) zusammenwirkt, welches zwischen dem Verbindungsteil (48) und dem Eingriffsteil (47) angeordnet ist und bei Aktivierung des Aktuators (62) bewegbar ist zum Lösen des Verbindungsteils (48) von dem Eingriffsteil (47).

3. Lenksäule nach Anspruch 2, **dadurch gekennzeichnet, dass** das Eingriffsteil (47) und das Verbindungsteil (48) Formschlusselemente (472, 482) aufweisen, mit denen das Koppelelement (61) zusammenwirkt.

4. Lenksäule nach einem der vorangehenden Ansprüche, **dadurch gekennzeichnet, dass** die Koppelvorrichtung (6) einen pyroelektrischen Aktuator (62) aufweist.

5. Lenksäule nach einem der vorangehenden Ansprüche, **dadurch gekennzeichnet, dass** das Eingriffsteil (47) und das Verbindungsteil (48) miteinander in Eingriff bringbare Positionierelemente (475, 485) aufweisen.

6. Lenksäule nach einem der vorangehenden Ansprüche, **dadurch gekennzeichnet, dass** das Eingriffsteil (47) über ein Sollbruchelement (474) mit dem inneren Mantelrohr (31) verbunden ist.

7. Lenksäule nach Anspruch einem der vorangehenden Ansprüche, **dadurch gekennzeichnet, dass** zumindest ein Energieabsorptionselement (54, 56) als U-förmiges Biegeelement ausgebildet ist, das zwei über eine Umbiegung (542, 562) miteinander verbundene Schenkel (541, 561, 543, 563) aufweist, wobei der eine Schenkel (543, 563) am Eingriffsteil (47) oder am Verbindungsteil (48) festlegbar ist und der andere Schenkel (541, 561) an dem inneren Mantelrohr (31) in Längsrichtung abstützbar ist.

8. Lenksäule nach Anspruch 7, **dadurch gekennzeichnet, dass** zumindest zwei Biegeelemente (54, 56) mit ihren Schenkeln (541, 561) in Längsrichtung gleich ausgerichtet sind.

9. Lenksäule nach einem der vorangehenden Ansprüche, **dadurch gekennzeichnet, dass** zumindest zwei Energieabsorptionselemente (54, 56) in Längsrichtung aufeinander folgend angeordnet sind.

10. Lenksäule nach einem der vorhergehenden Ansprüche , **dadurch gekennzeichnet, dass** die Energieabsorptionselemente (54, 56) in einem gemeinsamen Gehäuse (51) angeordnet sind.

11. Lenksäule nach einem der vorhergehenden Ansprüche , **dadurch gekennzeichnet, dass** die Energieabsorptionselemente (54, 56) in einem an dem inneren Mantelrohr (31) angebrachten, radial offenen C-förmigen Innenprofil (53) angeordnet sind.

12. Lenksäule nach Anspruch 11, **dadurch gekennzeichnet, dass** das Gehäuse (51) mit dem Mantelrohr verbunden ist und das Gehäuse (51) einen in Längsrichtung langgestreckten Schlitz (52) aufweist, durch den sich die Mitnehmerelemente (476, 486) des Eingriffsteils (47) und des Verbindungsteils (48) erstrecken.

## Claims

1. Steering column (1) for a motor vehicle, comprising an inner casing tube (31), in which a steering spindle (30) is mounted so as to be rotatable about its longitudinal axis (L),
an outer casing unit (33), in which the inner casing tube (31) is held and which is directly or indirectly connectable to the body of a motor vehicle,
a clamping device (4), which in the fixing position secures the outer casing unit (33) relative to the inner casing tube (31) and which in the release position permits an adjustment of the inner casing tube (31) relative to the outer casing unit (33) at least in the longitudinal direction,
wherein the clamping device (4) comprises at least one locking element (46), which is supported in the longitudinal direction on the outer casing unit (33) and which in the fixing position is non-displaceably connected in the longitudinal direction to an engagement part (47) connected to the inner casing tube (31), and which in the release position is released from the engagement part (47) and permits a relative movement of the inner casing tube (31) relative to the outer casing unit (33) in the longitudinal direction,
wherein the inner casing tube (31) and the outer casing unit (33) are coupled by way of an energy absorption device (5) which comprises at least two energy absorption elements (54, 56) and a coupling device (6), wherein at least one of the energy absorption elements (54, 56) can be coupled in or out between the inner casing tube (31) and the outer casing unit (33) via the coupling device (6), which energy absorption element in the coupled-in state and in the fixing position of the clamping device (4) is plastically deformable in the event of a relative displacement in the longitudinal direction of the inner casing tube (31) and the outer casing unit (33),
wherein the engagement part (47) comprises a first driver element (476) which can be brought into operative engagement with the first energy absorption element (56),
**characterized in that**
the engagement part (47) comprises at least one connecting part (48) which comprises a second driver element (486), which can be brought into operative engagement with the second energy absorption element (54), wherein the engagement part (47) and the connecting part (48) are connected to each other in the longitudinal direction via the coupling device (6) in a releasable manner.

2. Steering column according to Claim 1, **characterized in that** the coupling device (6) comprises an actuator (62), which interacts with a movable coupling element (61), which is arranged between the connecting part (48) and the engagement part (47) and upon activation of the actuator (62) is movable for the releasing of the connecting part (48) from the engagement part (47).

3. Steering column according to Claim 2, **characterized in that** the engagement part (47) and the connecting part (48) have form-fitting elements (472, 482) with which the coupling element (61) interacts.

4. Steering column according to one of the preceding claims, **characterized in that** the coupling device (6) comprises a pyroelectrical actuator (62).

5. Steering column according to one of the preceding claims, **characterized in that** the engagement part (47) and the connecting part (48) have positioning elements (475, 485) which can be brought into engagement with each other.

6. Steering column according to one of the preceding claims, **characterized in that** the engagement part (47) is connected by a predetermined breaking element (474) to the inner casing tube (31).

7. Steering column according to one of the preceding claims, **characterized in that** at least one energy absorption element (54, 56) is designed as a U-shaped bending element, which comprises two legs (541, 561, 543, 563) joined together by a bend (542, 562), wherein one leg (543, 563) can be secured on the engagement part (47) or on the connecting part (48) and the other leg (541, 561) can be supported on the inner casing tube (31) in the longitudinal direction.

8. Steering column according to Claim 7, **characterized in that** at least two bending elements (54, 56) are oriented with their legs (541, 561) equally in the longitudinal direction.

9. Steering column according to one of the preceding claims, **characterized in that** at least two energy absorption elements (54, 56) are arranged in succession in the longitudinal direction.

10. Steering column according to one of the preceding claims, **characterized in that** the energy absorption elements (54, 56) are arranged in a common housing (51).

11. Steering column according to one of the preceding claims, **characterized in that** the energy absorption elements (54, 56) are arranged in a radially open C-shaped inner profile (53) mounted on the inner casing tube (31).

12. Steering column according to Claim 11, **characterized in that** the housing (51) is connected to the casing tube and the housing (51) comprises a slot (52) elongated in the longitudinal direction, through which the driver elements (476, 486) of the engagement part (47) and the connecting part (48) extend.

## Revendications

1. Colonne de direction (1) pour un véhicule automobile, comprenant
un tube d'enveloppe intérieur (31) dans lequel un arbre de direction (30) est monté rotatif autour de son axe longitudinal (L),
une unité d'enveloppe extérieure (33) dans laquelle est maintenu le tube d'enveloppe intérieur (31) et qui peut être reliée directement ou indirectement à la carrosserie d'un véhicule automobile,
un dispositif de serrage (4) qui, dans la position d'immobilisation, bloque l'unité d'enveloppe extérieure (33) par rapport au tube d'enveloppe intérieur (31) et, dans la position de libération, autorise un réglage du tube d'enveloppe intérieur (31) par rapport à l'unité d'enveloppe extérieure (33) au moins dans la direction longitudinale,
dans laquelle le dispositif de serrage (4) comprend au moins une partie de blocage (46), laquelle s'appuie contre l'unité d'enveloppe extérieure (33) dans la direction longitudinale et, dans la position d'immobilisation, est reliée de manière non déplaçable dans la direction longitudinale à une partie de mise en prise (47), laquelle est reliée au tube d'enveloppe intérieur (31), et, dans la position de libération, est détachée de la partie de mise en prise (47) et autorise un mouvement relatif du tube d'enveloppe intérieur (31) par rapport à l'unité d'enveloppe extérieure (33) dans la direction longitudinale,
dans laquelle le tube d'enveloppe intérieur (31) et l'unité d'enveloppe extérieure (33) sont accouplés par le biais d'un dispositif d'absorption d'énergie (5) qui comprend au moins deux éléments d'absorption d'énergie (54, 56) et un dispositif d'accouplement (6),
dans laquelle, par le biais du dispositif d'accouplement (6), au moins l'un des éléments d'absorption d'énergie (54, 56) peut être accouplé ou désaccouplé entre le tube d'enveloppe intérieure (31) et l'unité d'enveloppe extérieure (33), lequel est déformable plastiquement à l'état accouplé dans la position d'immobilisation du dispositif de serrage (4) en cas de déplacement relatif dans la direction longitudinale du tube d'enveloppe intérieur (31) et de l'unité d'enveloppe extérieure (33), dans laquelle la partie de mise en prise (47) comprend un premier élément d'entraînement (476), lequel peut être amené en prise fonctionnelle avec le premier élément d'absorption d'énergie (56),
**caractérisée en ce que**
la partie de mise en prise (47) comprend au moins une partie de liaison (48) qui comprend un deuxième élément d'entraînement (486), lequel peut être amené en prise fonctionnelle avec le deuxième élément d'absorption d'énergie (54), la partie de mise en prise (47) et la partie de liaison (48) étant reliées de manière séparable l'une de l'autre dans la direction longitudinale par le biais du dispositif d'accouplement (6).

2. Colonne de direction selon la revendication 1, **caractérisée en ce que** le dispositif d'accouplement (6) comprend un actionneur (62) qui coopère avec un élément d'accouplement mobile (61), lequel est disposé entre la partie de liaison (48) et la partie de mise en prise (47) et est mobile en cas d'activation de l'actionneur (62) pour détacher la partie de liaison (48) de la partie de mise en prise (47).

3. Colonne de direction selon la revendication 2, **caractérisée en ce que** la partie de mise en prise (47) et la partie de liaison (48) comprennent des éléments de complémentarité de forme (472, 482) avec lesquels l'élément d'accouplement (61) coopère.

4. Colonne de direction selon l'une des revendications précédentes, **caractérisée en ce que** le dispositif d'accouplement (6) comprend un actionneur pyroélectrique (62) .

5. Colonne de direction selon l'une des revendications précédentes, **caractérisée en ce que** la partie de mise en prise (47) et la partie de liaison (48) comprennent des éléments de positionnement (475, 485) pouvant être amenés en prise l'un avec l'autre.

6. Colonne de direction selon l'une des revendications précédentes, **caractérisée en ce que** la partie de mise en prise (47) est reliée au tube d'enveloppe intérieur (31) par le biais d'un élément destiné à la rupture (474).

7. Colonne de direction selon l'une des revendications précédentes, **caractérisée en ce qu'**au moins un élément d'absorption d'énergie (54, 56) est réalisé sous forme d'élément de flexion en forme de U, lequel comprend deux branches (541, 561, 543, 563) reliées entre elles par un cintrage (542, 562), l'une des branches (543, 563) pouvant être fixée à la partie de mise en prise (47) ou à la partie de liaison (48) et l'autre branche (541, 561) pouvant s'appuyer contre le tube d'enveloppe intérieur (31) dans la direction longitudinale.

8. Colonne de direction selon la revendication 7, **caractérisée en ce que** les branches (541, 561) d'au moins deux éléments de flexion (54, 56) sont orientées de manière identique dans la direction longitudinale.

9. Colonne de direction selon l'une des revendications précédentes, **caractérisée en ce qu'**au moins deux éléments d'absorption d'énergie (54, 56) sont positionnés successivement dans la direction longitudinale.

10. Colonne de direction selon l'une des revendications précédentes, **caractérisée en ce que** les éléments d'absorption d'énergie (54, 56) sont disposés dans un boîtier (51) commun.

11. Colonne de direction selon l'une des revendications précédentes, **caractérisée en ce que** les éléments d'absorption d'énergie (54, 56) sont disposés dans un profilé intérieur (53) en forme de C ouvert radialement monté sur le tube d'enveloppe intérieur (31).

12. Colonne de direction selon la revendication 11, **caractérisée en ce que** le boîtier (51) est relié au tube d'enveloppe et le boîtier (51) comprend une fente (52) allongée dans la direction longitudinale, à travers laquelle s'étendent les éléments d'entraînement (476, 486) de la partie de mise en prise (47) et de la partie de liaison (48).
